# EUROPEAN PATENT APPLICATION

(11) **EP 3 032 912 A1**
(43) Date of publication of application: **15.06.2016**
(21) Application number: 14792248.8
(22) Date of filing: 16.05.2014
(51) Int. Cl.: H04W 76/04

(54) **CONNECTION MANAGEMENT METHOD AND ACCESS NETWORK ELEMENT**

(30) Priority: 12.08.2013 CN 201310350357
(71) Applicant: ZTE Corporation, Shenzhen, Guangdong 518057 (CN)
(72) Inventor: SHI, Xiaojuan, Shenzhen Guangdong 518057 (CN); HUANG, Yada, Shenzhen Guangdong 518057 (CN); DU, Zhongda, Shenzhen Guangdong 518057 (CN)
(74) Representative: Gervasi, Gemma
(86) International application number: PCT/CN2014/077703
(87) International publication number: WO 2014/177083

(57) **Abstract**

The embodiment of the present invention discloses a connection management method and an access network element, wherein the method is applied to a scenario in which a user equipment (UE) establishes connections with at least two access network elements at the same time, including: when determining that at least part of the connections between the UE and one resource connection node need to be deleted or moved, a primary connection node instructing the resource connection node to correspondingly delete or move the at least part of the connections, and the resource connection node or the primary connection node instructing the UE to correspondingly delete or move the at least part of the connections. The embodiment of the present invention achieves a connection management between the UE and the resource connection node in a dual-connection architecture, and particularly achieves the connection management when the resource connection node is no longer suitable for providing the UE with information transmission or no longer suitable for providing the UE with information transmission of all the previously established connections.

## Description

### Technical Field

The present invention relates to the field of mobile communications, and more particularly, to a connection management method and an access network element.

### Background of the Related Art

From the development of the first generation mobile communication system in 1980s to date, the mobile communication technology has entered into the 4G (fourth generation mobile communication technology) era, the mobile communication needs of users also experienced the process from single voice service, to voice and basic data services, to the explosive growth of data service, the mobile communications have gradually upgraded to the current mobile Internet era. In the mobile Internet era, new mobile application needs, especially those high-quality, high-rate and low-latency mobile application needs, present explosive growth, and according to the forecasts of the International Telecommunications Union (referred to as ITU), from 2010 to 2015, the mobile communication service has occurred 15 to 30-fold increase with respect to the previous time, and by 2020, the mobile communication service is very likely to have more than 500-fold increase.

The explosive growth of the mobile communication service and the higher user expectation for mobile communication experiences, such as higher throughput, lower latency, faster rate and lower cost, drive the existing mobile communication technology and mobile communications network to further develop and upgrade, including: expanding the network capacity, enhancing the network coverage, enhancing collaborations between different cells and different networks, increasing the flexibility of network deployment, and reducing the cost of network deployment, and so on.

Through the statistics on user communication behaviors and habits, it can be found that, most of high data-traffic communications are concentrated in indoor environments and hotspots, such as shopping malls, schools, homes, large-scale performances and gathering places, and considering characteristics such as that the indoor environments and hotspot areas are widely distributed and dispersed, a single area is small and users are concentrated, a low power node (LPN) came into being. Conceptually, LPN refers to a radio access network node whose transmission power is lower than the transmission power of a Macro Node or Base Station (BS) in a traditional macro network, the LPN may be a Pico node, a Femto/Home (e)NB, and any other cellular node whose transmission power is lower than that of the macro node or BS. The LPN deployment can effectively expand the network capacity and enhance network coverage, ultimately increase the end-user throughput, and improve the end-user communication experience. Furthermore, because the transmission power of the LPN is low, it can be plugged-and-played, therefore, the network operators can deploy the LPN flexibly and conveniently as needed, the network operators can even open the LPN deployment privilege to users such as enterprises and schools and even to individual users, thereby increasing the flexibility of network deployments while reducing the costs of network deployment, operation and maintenance.

In order to achieve the objective of, in terms of network, expanding the network capacity, enhancing the network coverage, increasing the flexibility of network deployment, reducing the costs of network deployment, and in terms of users, improving the user communication experience, including increasing the throughput of the User Equipment (referred to as UE) and improving the mobility performance of the UE, the LPNs are expected to be deployed in large numbers, for example, for the 4G LTE (long Term Evolution) system, after the 3gpp (the 3rd Generation Partner Project) Release12 (referred to as R12) and R12+, it is expected to deploy a large number of LPNs on the basis of the traditional macro network, including both indoor environments and outdoor environments.

To improve the user communication experience, especially to improve the throughput and mobility performances of the user equipment, currently many operators and equipment manufacturers tend to seek a new technical solution, and the multi-connection is one of them. The multi-connection refers to that the user equipment can use resources of at least two different access network elements at the same time, and the at least two different access network elements and and their roles in the multi-connection may not rely on functional characteristics of the access network elements, for example, the at least two different access network element may be both traditional macro nodes or low power nodes, or some of them may be macro nodes and the others are low power nodes. Considering that the low power nodes may be likely deployed in hotspots in the macro node coverage and indoor coverage areas, it can be predicted the multi-connection solution that the user equipment uses resources of the macro nodes and the low power nodes simultaneously can greatly improve the user communication experience and meet new mobility needs.

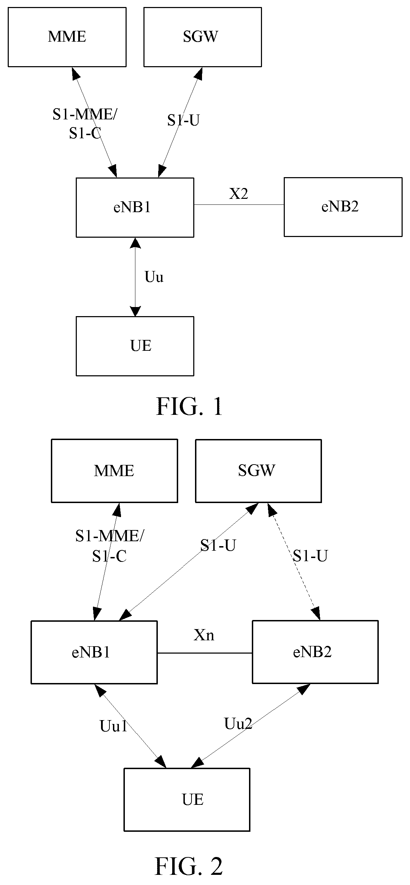

As shown in FIG. 1, the LTE system comprises: Mobility Management Entity (MME) and Serving Gateway (abbreviated to as SGW) of a Core Network (CN) network element, base stations (eNB1 and eNB2) of a Radio Access network (RAN) network element, as well as the UE. The UE communicates with the serving base station eNB over the air interface (Uu interface), the serving base station eNB1 achieves the signaling transmission with the MME via the control plane S1 interface protocol S1-MME/S1-C, while achieves the user plane data transmission via the user plane S1 interface protocol S1-U. The serving base station eNB1 can achieve the control plane signaling and user plane data transmission with the adjacent base station eNB2 via the X2 interface protocol between the base stations. From FIG. 1, it can be seen that in the LTE system, one UE is only connected with one base station and only use resources of the one base station; the one UE also establishes a connection with only one MME/SGW.

FIG. 2 shows a schematic diagram of a system architecture after introducing a multi-connection in the LTE system, taking the dual connection for an example, compared with the single-connection system architecture in FIG. 1, the UE can be connected with the base station eNB1 and the base station eNB2 via the air interfaces Uu1 and Uu2 respectively, that is, the UE can use resources of the eNB1 and the eNB2 simultaneously to achieve the dual-connection of air interface resources. While for the MME in the core network control plane, the UE is only connected to the MME via the base station eNB1, thus avoiding modifications on the core network and signaling impact due to introducing the air interface dual-connection. In the core network user plane, because one of the purposes of the dual-connection is to increase the UE throughput, depending on different network architecture design needs, besides that the UE accesses to the SGW via the S1-U interface of the eNB1, in addition, the UE can also access to the SGW via the S1-U interface of the eNB2. In addition, an Xn interface is established between the eNB1 and the eNB2 to achieve the interaction of control plane information or the interaction of both control plane information and user plane information. The types of the two base stations for the UE achieving the dual-connection in FIG. 2 are not limited, the eNB1 and the eNB2 may be both macro nodes or both low power nodes, or one is a macro node and the other is a low power node, or they may be any other possible access network nodes; the modes of the eNB1 and the eNB2 are not limited either, they can both be Time division duplexing (TDD) or both be frequency division duplexing (FDD) mode, or one is the TDD mode or and the other is the FDD mode. In addition, the dual connection in FIG. 2 is only one example, and the UE can achieve the solution of the multi-connection with more than three eNBs.

However, with the emergence of the multi-connection solution, the user equipment can be extended from currently only using resources of one access network element to using resources of two or more access network elements, or to say, the user equipment can be extended from currently only being connected with one access network element to being connected with more than two or even three access network elements, which inevitably poses new challenges to the connection management, and there is need to seek new connection management solutions.

### Summary of the Invention

The embodiment of the present invention provides a connection management method and an access network element to overcome the defect that a multi-connection cannot be managed in the related art.

To solve the abovementioned problem, the embodiment of the present invention provides a connection management method, applied to a scenario in which a user equipment (UE) establishes connections with at least two access network elements at the same time, comprising:
when determining that at least part of connections between the user equipment (UE) and a resource connection node need to be deleted or moved, a primary connection node instructing the resource connection node to correspondingly delete or move the at least part of the connections, and the resource connection node or the primary connection node instructing the UE to correspondingly delete or move the at least part of the connections.

Preferably,
said instructing the resource connection node to correspondingly delete or move the at least part of the connections comprises:
the primary connection node instructing the resource connection node to correspondingly delete or move at least part of radio access bearers (RABs) used for user plane data transmission and borne by the resource connection node.

Preferably,
the primary connection node instructing the UE to correspondingly delete or move the at least part of the connections comprises:
at the same time of instructing the resource connection node to correspondingly delete or move the at least part of the connections, the primary connection node instructing the UE to correspondingly delete or move the at least part of the connections; or,
the primary connection node instructing the UE to correspondingly delete or move the at least part of the connections after learning that the resource connection node has correspondingly deleted or moved the at least part of the connections.

Preferably,
the resource connection node instructing the UE to correspondingly delete or move the at least part of the connections comprises:
the resource connection node instructing the UE to correspondingly delete or move the at least part of the connections after receiving the instruction of the primary connection node.

Preferably,
said instructing the UE to delete or move the at least part of the connections comprises:
instructing the UE to delete or move at least one user plane data radio bearer (DRB) between the UE and the resource connection node, or the at least one user plane DRB and at least one control plane signaling radio bearer (SRB) between the UE and the resource connection node.

Preferably,
the primary connection node determining that at least part of connections between the UE and a resource connection node need to be deleted or moved comprises:
the primary connection node judging whether at least part of the connections between the UE and the resource connection node need to be deleted or moved based on at least one factor of a received measurement report, a radio resource management (RRM) algorithm, received load information and traffic transmission status of the resource connection node.

Preferably,
said instructing the resource connection node to correspondingly delete or move the at least part of the connections comprises:
initiating a connection reconfiguration request to the resource connection node, wherein the request carries information of connections that the primary connection node decides to delete or decides to move from the resource connection node;
wherein the information of the connections comprises at least identification information of the connections.

Preferably,
the information of the connections further comprises identification information of uplink and downlink user plane GPRS tunneling protocol tunnels provided by the primary connection node and used by the deleted/moved connections for data forward transmission at an Xn Interface between the resource connection node and the primary connection node.

Preferably,
the information of the connections further comprises instruction information of whether each deleted/moved connection performs the data forward transmission;
when determining that a value of the instruction information of whether to perform the data forward transmission represents that the data forward transmission needs to be performed, the resource connection node forwards the data to the primary connection node.

Preferably, the method further comprises:
after correspondingly deleting/removing the connections based on the instruction of the primary connection node, the resource connection node sending information of all the deleted/moved connections to the primary connection node; wherein, the information at least comprises identification information of all the deleted/moved connections.

Preferably,
information of all the deleted/moved connections further comprises an instruction of whether each deleted/moved connection performs the data forward transmission.

Preferably,
the information of all the connections further comprises a transmission sequence status of data transmission in each deleted/moved connection, comprising: any one or any combination of a receiving status instruction of uplink Packet Data Convergence Protocol Service Data Unit (PDCP SDU), a count number of a first lost uplink the PDCP SDU and a count number of a first lost downlink PDCP SDU.

Preferably,
after correspondingly deleting/moving the connections based on the instruction of the primary connection node, the resource connection node sends a transmission sequence status of data transmission in each deleted/moved connection to the primary connection node, comprising: any one or any combination of a receiving status instruction of uplink PDCP SDU, a count number of a first lost uplink PDCP SDU and a count number of a first lost downlink PDCP SDU.

Preferably,
after receiving the instruction sent by the primary connection node, the resource connection node deletes all of connections between the UE and the resource connection node.

Preferably, the method further comprises:
after correspondingly deleting or moving the at least part of the connections, the UE sending a response to the primary connection node.

Preferably, the method further comprises:
after receiving the response replied by the UE, notifying the resource connection node that deleting or moving is successful.

Accordingly, the embodiment of the present invention further provides an access network element, comprising:
a determining module, configured to, when the access network element works as a primary connection node, determine whether at least part of connections between a UE and a resource connection node need to be deleted or moved;
an instructing module, configured to, when the access network element works as a primary connection node, when the determining module determines that at least part of the connections between the UE and the resource connection node need to be deleted or moved, instruct the resource connection node to correspondingly delete or move the at least part of the connections.

Preferably,
the instructing module is further configured to, when the access network element works as a primary connection node, when the determining module determines that at least part of the connections between the UE and the resource connection node need to be deleted or moved, instruct the UE to correspondingly delete or move the at least part of the connections; or, further configured to, when the access network element works as a resource connection node, after receiving an instruction for deleting or moving at least part of connections sent by a primary connection node, instruct the UE to correspondingly delete or move the at least part of the connections.

Preferably,
the instructing module being configured to instruct the resource connection node to correspondingly delete or move the at least part of the connections, comprises:
the instructing module being configured to instruct the resource connection node to correspondingly delete or move at least part of radio access bearers (RABs) borne by the resource connection node and used for user plane data transmission.

Preferably,
the instructing module being configured to: when the access network element works as a primary connection node, instruct the UE to correspondingly delete or move the at least part of the connections, comprises:
the instructing module being configured to: when the access network element works as a primary connection node, at the same time of instructing the resource connection node to correspondingly delete or move the at least part of the connections, instruct the UE to correspondingly delete or move the at least part of the connections; or,
the instructing module being configured to: when the access network element works as a primary connection node, after learning that the resource connection node has correspondingly deletes or moves the at least part of the connections, instruct the UE to correspondingly delete or move the at least part of the connections.

Preferably,
the instructing module being configured to instruct the UE to delete or move the at least part of the connections, comprises:
the instructing module being configured to instruct the UE to delete or move at least one user plane data radio bearer (DRB) between the UE and the resource connection node, or the at least one user plane DRB and at least one control plane signaling radio bearer (SRB) between the UE and the resource connection node.

Preferably,
the determining module being configured to determine whether at least part of connections between a UE and a resource connection node need to be deleted or moved, comprises:
the determining module being configured to judge whether at least part of connections between the UE and the resource connection node need to be deleted or moved based on at least one factor of a received measurement report, a radio resource management (RRM) algorithm, received load information and traffic transmission situation of the resource connection node.

Preferably,
the instructing module being configured to instruct the resource connection node to correspondingly delete or move the at least part of the connections, comprises:
the instructing module being configured to initiate a connection reconfiguration request to the resource connection node, wherein the request carries information of connections that the primary connection node decides to delete, or decides to move from the resource connection node;
wherein information of the connections at least comprises identification information of the connections.

Preferably,
the information of the connections further comprises identification information of uplink and downlink user plane GPRS tunneling protocol tunnels provided by the primary connection node and used by the deleted/moved connections for data forward transmission at an Xn Interface between the resource connection node and the primary connection node.

Preferably,
the information of the connections further comprises instruction information of whether each deleted/moved connection performs the data forward transmission;
when the access network element works as a resource connection node, the access network element further comprises:
a sending module, configured to: when determining that a value of the instruction information of whether to perform the data forward transmission represents that the data forward transmission needs to be performed, forward the data to the primary connection node.

Preferably, the access network element further comprises:
a sending module, configured to: when the access network element works as a resource connection node, after correspondingly deleting/moving the connections based on the instruction of the primary connection node, send information of all the deleted/moved connections to the primary connection node; wherein, the information at least comprises identification information of all the deleted/moved connections.

Preferably,
information of all the deleted/moved connections sent by the sending module further comprises an instruction of whether each deleted/moved connection performs the data forward transmission.

Preferably,
the information of all the deleted/moved connections sent by the sending module further comprises a transmission sequence status of data transmission in each deleted/moved connection, comprising: any one or any combination of a receiving status instruction of uplink Packet Data Convergence Protocol Service Data Unit (PDCP SDU), a count number of a first lost uplink PDCP SDU and a count number of a first lost downlink PDCP SDU.

Preferably,
the sending module is further configured to: after correspondingly deleting/moving the connections based on the instruction of the primary connection node, send a transmission sequence status of data transmission in each deleted/moved connection to the primary connection node, comprising: any one or any combination of a receiving status instruction of uplink Packet Data Convergence Protocol Service Data Unit (PDCP SDU), a count number of a first lost uplink PDCP SDU and a count number of a first lost downlink PDCP SDU.

The embodiment of the present invention achieves the connection management between the UE and the resource connection node in a dual-connection architecture, particularly, achieves the connection management when the resource connection node is no longer suitable for providing the UE with information transmission or no longer suitable for providing the UE with information transmission of all the previously established connections.

### Brief Description of the Drawings

FIG. 1 is a system architectural diagram of a long-term evolution system in the related art;
FIG. 2 is a system architectural diagram after introducing a dual-connection into the long-term evolution system;
FIG. 3 is a flow chart of a connection management method in accordance with an embodiment of the present invention;
FIG. 4 is a non-limited schematic diagram of a connection management method applicable scenario in accordance with an embodiment of the present invention;
FIG. 5 is a schematic diagram of the architecture of a dual connection radio interface control plane in accordance with a first embodiment of the present invention;
FIG. 6 is a flow chart of a connection management in accordance with the first example of the first embodiment of the present invention;
FIG. 7 is a flow chart of a connection management in accordance with the second example of the first embodiment of the present invention;
FIG. 8 is a flow chart of an optimized connection management in accordance with the first example of the first embodiment of the present invention;
FIG. 9 is a flow chart of an optimized connection management in accordance with the second example of the first embodiment of the present invention;
FIG. 10 is a flow chart of a connection management in accordance with the third example of the first embodiment of the present invention;
FIG. 11 is a flow chart of a method in accordance with the first embodiment of the present invention;
FIG. 12 is a schematic diagram of the architecture of a dual-connection radio interface control plane in accordance with a second embodiment of the present invention;
FIG. 13 is a flow chart of the connection management in accordance with the first example of the second embodiment of the present invention;
FIG. 14 is a flow chart of the connection management in accordance with the second example of the second embodiment of the present invention;
FIG. 15 is a flow chart of the connection management in accordance with the third example of the second embodiment of the present invention;
FIG. 16 is a flow chart of a method in accordance with the second embodiment of the present invention.

### Preferred Embodiments of the Invention

Hereinafter, in conjunction with the accompanying drawings, embodiments of the present invention will be described in detail. In the case of no conflict, embodiments and features in the embodiments of the present application may be combined arbitrarily with each other.

In FIG. 2, the UE is connected with both the eNB1 and the eNB2 via the the Uu1 and the Uu2 at the air interface simultaneously, but in order to reduce modifications on the core network and signaling impacts, the control plane UE is only connected to the MME via the eNB1, that is, the eNB1 achieves the control plane access anchor point between the UE and the MME. In the present embodiment, the access network element (such as the base station eNB1 in FIG. 2) that realizes the anchor point function of the UE control plane accessing to the MME is called a primary connection node and other access network elements (such as the base station eNB2 in FIG. 2) connected with the UE are called resource connection nodes. In addition to the primary connection node providing the UE with information transmission, the resource connection node can also provide the UE with information transmission, the information transmission between the UE and the primary connection node as well as the resource connection node can be simultaneous transmission or cooperative transmission in the time-division multiplexing mode, depending on the hardware capability of the UE and the network configuration.

The embodiment of the present invention provides a connection management method, especially a connection management method for the case that the resource connection node is no longer suitable for providing the UE with information transmission, namely: for the case that connections between the UE and the resource connection node need to be deleted, or that connections between the UE and the resource connection node need to be moved to the primary connection node, then the primary connection node may further move the connections to other resource connection nodes. The connections between the UE and the resource connection node comprise at least: a user plane data connection between the UE and the resource connection node, and may also comprise control plane signaling connections between the UE and the resource connection node.

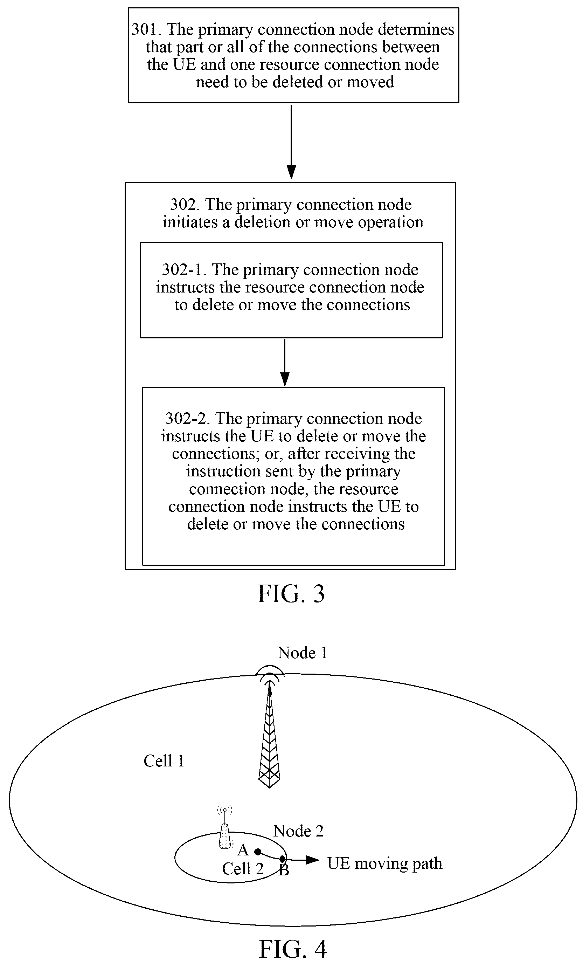

As shown in FIG. 3, the UE originally establishes connections with more than two access network elements, a connection management method, applied to the abovementioned multi-connection scenario, comprises:
301. the primary connection node determines that part or all of connections between the UE and one resource connection node need to be deleted or moved.
   Wherein, the primary connection node judges whether part or all of the connections between the UE and the one resource connection node need to be deleted or moved according to the factor of any one or any combination of the received measurement report, the Radio Resource Management (RRM) algorithm, received load information and traffic transmission situation of the resource connection node.
302. the primary connection node initiates a deletion or move operation, and the operation comprises:
   302-1. the primary connection node instructs the resource connection node to delete or move the connections;
      wherein, the connections that the primary connection node instructs the resource connection node to delete or move refer to more than one Radio Access Bearer (RAB) used for the user plane data transmission of the UE and borne by the resource connection node, and the radio access bearers over the air interface refer to user plane data radio bearers (DRB) between the UE and the resource connection node.
   302-2. the primary connection node instructs the UE to delete or move the connections; or after receiving the instruction sent by the primary connection node, the resource connection node instructs the UE to delete or move the connections.

The operation of the primary connection node or the resource connection node instructing the UE to delete or move the connections may be realized by the primary connection node or the resource connection node reconfiguring the connections through an air interface message, and the operation of instructing the UE through the air interface message to reconfigure the connections is whether to delete the connections, or to delete the connections and establish new connections between the UE and the primary connection node, wherein the latter is equivalent to moving the connections to the primary connection node.

Wherein, the connections that the primary connection node or the resource connection node instructs the UE to delete or move refer to more than one user plane DRB between the UE and the resource connection node, or more than one control plane signaling radio Bear (SRB) between the more than one user plane DRB and the UE and the resource connection node.
wherein, if the primary connection node instructs the UE to delete or move the connections in 302-2, the operations of 302-1 and 302-2 can be executed successively or concurrently; if the resource connection node instructs the UE to delete or move the connections after receiving the instruction from the primary connection node in 302-2; the operations of 302-1 and 302-2 then are executed successively.

Through the abovementioned method, for the case of deleting part or all of the connections between the UE and the resource connection node, the resource connection node and the UE stop receiving and transmitting information in the deleted part or all of the connections. For the case of moving part or all of the connections between the UE and the resource connection node to the primary connection node, after the moving is successful, the primary connection node and the UE continue to receive and transmit information in the connections moved to the primary connection node, thus achieving the data continuity after deleting or moving the connections.

In the practice, the abovementioned two or more access network elements establishing connections with the UE may be but not limited to base stations.

FIG. 4 is a non-limited schematic diagram of the abovementioned connection management method being applied to a dual-connection scenario, the UE is within the jointly coverage area of the cell 1 deployed by the node 1 and the cell 2 deployed by the node 2 at the point A, therefore the UE establishes connections with the nodes 1 and 2 at the point A simultaneously, wherein the node 1 is the primary connection node of the UE, and the node 2 is the resource connection node of the UE. The moving path of the UE is indicated by the arrow solid line in FIG. 4, when the UE moves from the point A to the point B, the signal quality of the cell 2 is deteriorated and is no longer suitable for providing the UE with information transmission, so that connections between the UE and the node 2 need to be deleted or connections between the UE and the node 2 need to be moved to the primary connection node.

In the following, taking non-limiting embodiments as examples, and in conjunction with the accompanying drawings, the connection management solution of the present invention will be described in detail. Although the following non-limiting embodiments take the dual connection between the UE and two nodes in the LTE system as examples, they do not limit embodiments of the present invention from being applied to examples that UE is connected with three or more nodes, nor limit the embodiments of the present invention from being applied to other wireless network systems.

### The first embodiment

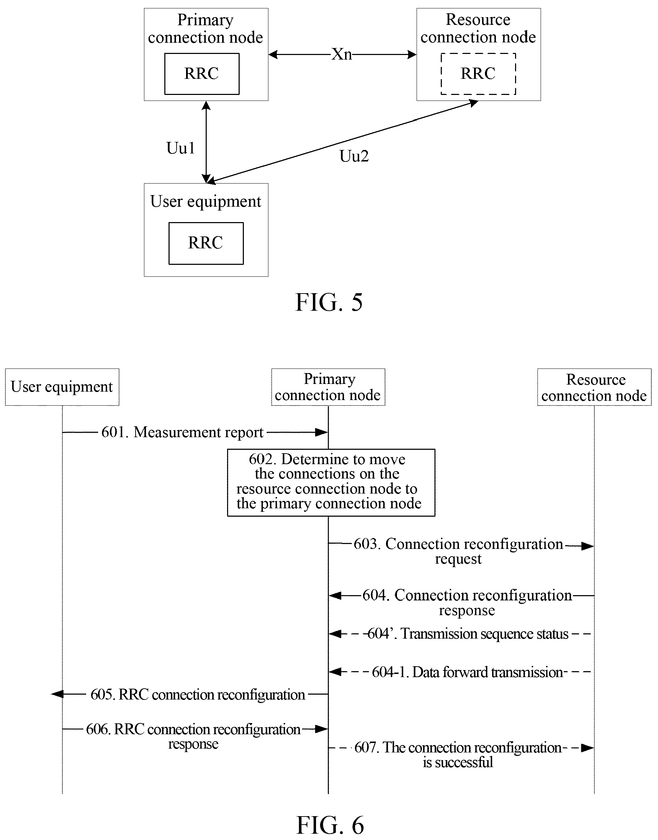

FIG. 5 is a schematic diagram of a dual-connection radio interface control plane architecture in the present embodiment, wherein, Radio Resource Control (RRC) entities are deployed in both the primary connection node and the UE, the RRC entities in both the primary connection node and the UE implement all the RRC functions in the LTE system in the related art, including reception and transmission of system broadcast messages as well as all functions of the RRC connection control. The RRC entities (as shown by the gray dashed box in FIG. 5) can be deployed in the resource connection node, or not. For the case that the RRC entities are not deployed in the resource connection node, the primary connection node is responsible for the RRC message transmission between the UE and the node; for the case that the RRC entities are deployed in the resource connection node, besides that the RRC messages are transmitted between the primary connection node and the UE, the RRC messages can also be transmitted between the resource connection node and the UE. In the first embodiment, no matter whether the RRC entities are deployed in the resource connection node, all the RRC messages are transmitted between the primary connection node and the UE.

### The first example

The present example is applicable to the scenario shown in FIG. 3, the UE originally establishes a dual-connection between the primary connection node and the resource connection node, thereafter, the UE detects that the signal quality of the cell (cell 2) in the coverage of the resource connection node where the UE is located becomes deteriorated and is no longer suitable for the UE to remain connections on the resource connection node, in the present example, the primary connection node determines to move the connections between the UE and the resource connection node to the primary connection node. As shown in FIG. 6, the connection management method comprises:
601. the UE reports a measurement report to the primary connection node. The measurement report comprises a measurement result of the cell 2;
602. after receiving the measurement report, the primary connection node decides to move the connections of the UE on the resource connection node to the primary connection node based on the measurement report and the RRM of the primary connection node;
   in the present example, the signal quality of the cell in the coverage of the resource connection node where the UE is located becomes deteriorated, and the primary connection node decides to move the connections of the UE on the resource connection node to the primary connection node based on the measurement report and the RRM, and this does not limit the case that the signal quality of the cell in the coverage of the resource connection node where the UE is located does not become deteriorated and is still suitable for providing the UE with connections, the primary connection node decides to move the connections of the UE on the resource connection node to the primary connection node based on its own RRM, for example when the primary connection node determines that resources of the primary connection node are enough for providing services to all of connections of the UE.
603. the primary connection node sends a connection reconfiguration request to the resource connection node;
   wherein, the connection reconfiguration request comprises information of the connections that the primary connection node determines to move from the resource connection node. The information of the moved connections may comprise identification information of the connections; and may further comprise identification information of uplink and downlink GTP-U (GPRS Tunneling protocol for the user plane) tunnels provided by the primary connection node and used for the moved connections to perform data forward transmission at the Xn interface between the resource connection node and the primary connection node; may further comprise an instruction of whether each moved connection performs the data forward transmission.
   Alternatively, in the present example, the signal quality of the cell 2 is deteriorated, the primary connection node decides to move all the connections of the UE on the resource connection node to the primary connection node, then the connection reconfiguration request message may not comprise information of any connection, and defining the connection reconfiguration message in itself means moving all the connections between the UE and the resource connection node away.
   The "connection reconfiguration request" is only an exemplary message name in the present example, and the message name is not limited to the present example, this description is applicable to all message names in all examples in accordance with the embodiments of the present invention.
604. the resource connection node returns a connection reconfiguration response to the primary connection node.
   The connection reconfiguration response comprises information of all the connections moved out from the resource connection node, information of the connections may comprise identification information of the connections, and may further comprise an instruction of whether each moved connection performs the data forward transmission. In addition, the connection reconfiguration response message may further comprise the transmission sequence status of the data transmission in each moved connection, such as including: any one or any combination of a receiving status instruction of uplink PDCP SDU (Packet Data Convergence Protocol Service Data Unit), the count number of the first lost uplink PDCP SDU, and the count number of the first lost downlink PDCP SDU.
   Of course, the transmission sequence status of the data transmission in each moved connection may also be sent to the primary connection node, independent from the connection reconfiguration response message (604' in FIG. 6).
   If the step 603 instructs that the data forward transmission needs to be performed, synchronous with the step 604, the resource connection node forwards the data to the primary connection node in 604-1.
605. the primary connection node sends the RRC connection reconfiguration message to the UE to instruct the UE to reconfigure the connections between the UE and the resource connection node to the primary connection node;
606. the UE feeds back an RRC connection reconfiguration response;
607. the present step is optional, the primary connection node notifies the resource connection node that the connection reconfiguration is successful, that is, the connection move is successful.

Based on the above operations of the present example, after successfully moving part or all of the connections between the UE and the resource connection node to the primary connection node, the primary connection node and the UE can continue to receive and transmit information in the connections moved to the primary connection node, thus enabling the connection move and the data continuity.

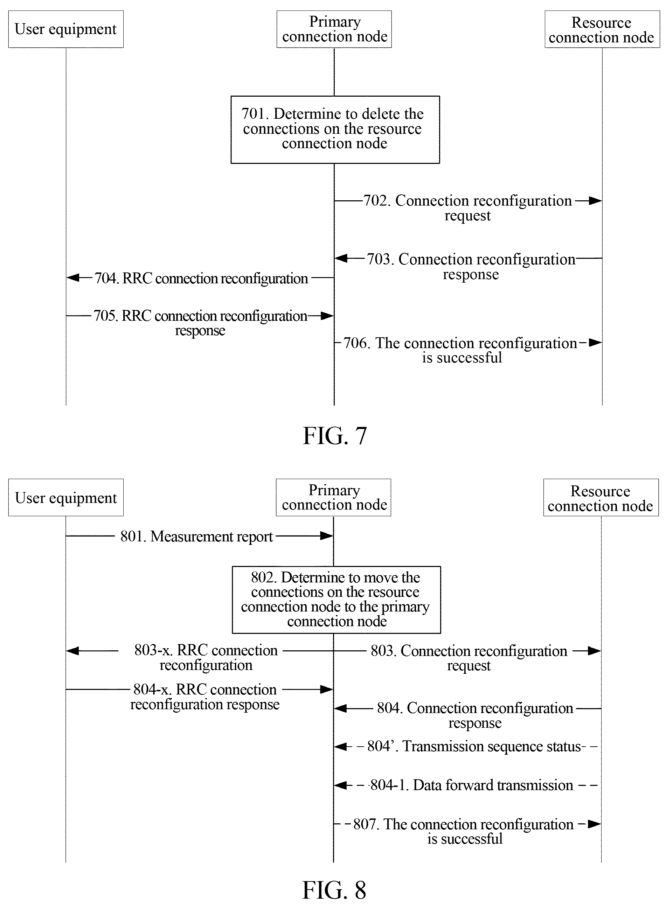

Preferably, the connection management process in the first example can be optimized as FIG. 8, steps 801, 802 and 807 are respectively the same as steps 601, 602 and 607; the descriptions of step 803 and steps 804, 804' and 804-1 are respectively the same as those of the step 603 and steps 604 and 604'; the descriptions of the steps 803-x and 804-x are respectively the same as those of the steps 605 and 606 respectively. That is, different from the abovementioned process, the operations (step 803, and step 804,804' and 804-1) of the primary connecting node instructing the resource connection node to move the connections between the UE and the resource connection node can be executed concurrently with the operations (step 803-x and step 804-x) of the primary connection node instructing the UE to move the connections between the UE and the resource connection node.

### The second example

The present example is applicable to the scenario in which the UE originally establishes the dual connection with the primary connection node and the resource connection node, then due to the drop in service traffic, in order to reduce the UE and network overhead, it is needed to delete the connection between the UE and the resource connection node, and return to the single connection status. In the present example, the primary connection node determines that the connection between the UE and the resource connection node need to be deleted. As shown in FIG. 7, the connection management method comprises:
701. the primary connection node determines that the service traffic is reduced, when the data transmission between the UE and the resource connection node ends, the primary connection node decides to delete the connections of the UE on the resource connection node;
702. the primary connection node sends a connection reconfiguration request to the resource connection node, wherein the connection reconfiguration request comprises information of the connections that the primary connection node decides to delete. Alternatively, in the present example, the data transmission between the UE and the resource connection node has ended, the connection reconfiguration request message may not comprise information of any connection, and defining the connection reconfiguration message in itself means deleting all the connections between the UE and the resource connection node;
703. the resource connection node returns a connection reconfiguration response to the primary connection node, wherein the connection reconfiguration response comprises information of all the connections deleted by the resource connection node, or the data transmission between the UE and the resource connection node has ended in the present example, and the connection reconfiguration response message may not comprise information of any connection, that is, it may indicate that the resource connection node deleted all the connections between the resource connection node and the UE;
704. the primary connection node sends an RRC connection reconfiguration message to the UE, wherein the RRC connection reconfiguration message instructs the UE to delete all of connections between the UE and the resource connection node;
705. the UE feeds back an RRC connection reconfiguration response;
706. the present step is optional, the primary connection node notifies the resource connection node that the connection reconfiguration is successful, that is, the connections are deleted successfully.

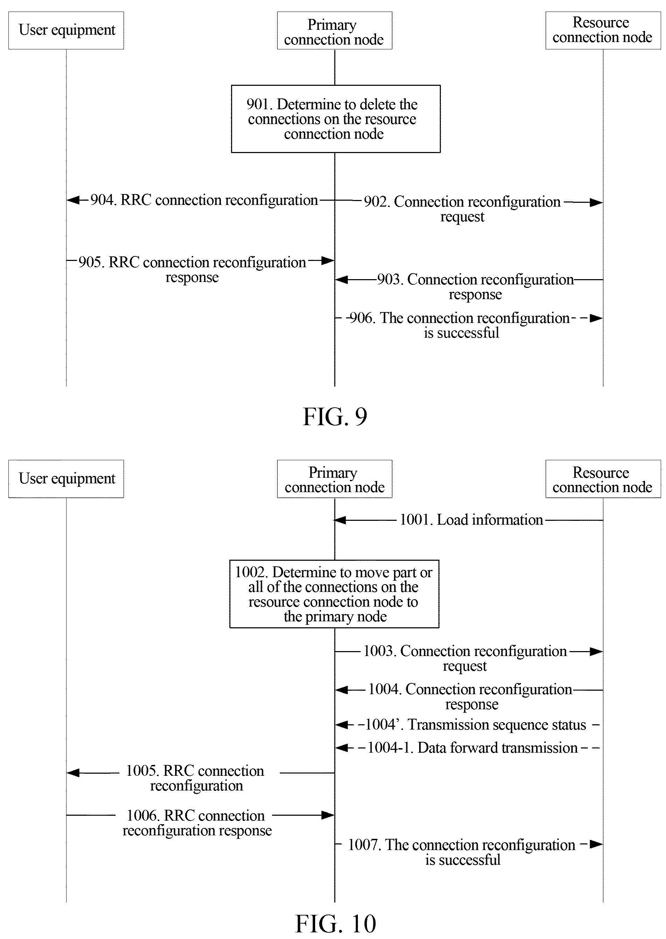

Preferably, the connection management process in the present example can be optimized as FIG. 9, the descriptions of steps 901 and 906 are respectively the same as those of steps 701 and 706; the descriptions of step 902 and 903 are respectively the same as those of the steps 702 and 703; the descriptions of the steps 902-x and 903-x are respectively the same as those of the steps 704 and 705. That is, different from the abovementioned process, the operations (steps 902 and 903) of the primary connecting node instructing the resource connection node to delete the connections between the UE and the resource connection node can be executed concurrently with the operations (step 902-x, step 903-x) of the primary connection node instructing the UE to delete the connections between the UE and the resource connection node.

Based on the above operations of the present example, after deleting part or all of the connections between the UE and the resource connection node, the resource connection node and the UE stop receiving and sending information in the deleted part or all of the connections.

### The third example

The present example is applicable to the scenario in which the UE originally establishes the dual connection with the primary connection node and the resource connection node, then due to the too heavy load of the resource connection node, part or all of the connections between the UE and the resource connection node need to be moved to the primary connection node. In the present example, the primary connection node decides and initiates to move part or all of the connections between the UE and the resource connection node to the primary connection node. As shown in FIG. 10, the connection management method of the present example comprises:
1001. the resource connection node notifies its own load information to the primary connection node. The load information may comprise: any one or any combination of hardware load, transmission layer load, radio resource load and interference load;
1002. the primary connection node decides to move part or all of the connections on the resource connection node to the primary connection node based on the received load information and the RRM algorithm. Of course, depending on the load of the primary connection node and the result of the RRM algorithm, the primary connection node may also select to delete part or all of the connections on the resource connection node.
1003 to 1007. it is the same as the description of steps 603∼607 in the first example and are not repeated here.

Preferably, the connection management process shown in FIG. 10 can be optimized, that is, the operations (steps 1003,1003' and 1003-1,1004) of the primary connection node instructing the resource connection node to move connections between the UE and the resource connection node can be executed concurrently with the operations (steps 1005,1006) of the primary connection node instructing the UE to move the connections between the UE and the resource connection node.

Based on the above operations of the present example, after successfully moving part or all of the connections between the UE and the resource connection node to the primary connection node, the primary connection node and the UE can continue to receive and transmit information in the connections moved to the primary connection node, thus enabling the connection move and the data continuity.

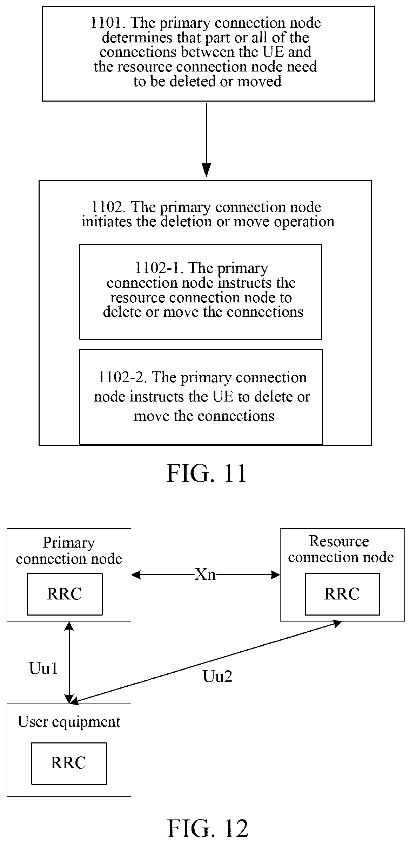

In combination of the above three examples, FIG. 11 is a flow chart of the method in accordance with the first embodiment. Assume that the UE originally establishes connections with two or more connection nodes, as shown in FIG. 11, the connection management method comprises:
1101. the primary connection node determines that part or all of the connections between the UE and the resource connection node need to be deleted or moved.
   Wherein, the primary connection node judges whether part or all of the connections between the UE and the resource connection node need to be deleted or moved based on one or more factors of the received measurement report, the RRM algorithm, received load information and traffic transmission status of the resource connection node;
1102. the primary connection node initiates the deletion or move operation, wherein the operation comprises:
   1102-1. the primary connection node instructs the resource connection node to delete or move the connections;
   1102-2. the primary connection node instructs the UE to delete or move the connections.

Wherein, the above operations 1102-1 and 1102-2 may be executed successively or concurrently.

With the method of the first embodiment, for the case of deleting part or all of the connections between the UE and the resource connection node, the resource connection node and the UE stop receiving and transmitting information in the deleted part or all of connections; for the case of moving part or all of the connections between the UE and the resource connection node to the primary connection node, after the move is successful, the primary connection node and the UE can continue to receive and transmit information in the connections moved to the primary connection node, thus enabling the connection deletion, the connection move and the data continuity, and achieving the connection management between the UE and the resource connection node in the multi-connection architecture.

### The second embodiment

FIG. 12 is a schematic diagram of a dual-connection radio interface control plane architecture in the present embodiment, wherein, Radio Resource Control (RRC) entities are deployed in both the primary connection node and the UE, the RRC entities in both the primary connection node and the UE implement all the RRC functions in the LTE system in the related art, including the reception and transmission of system broadcast messages as well as all functions of the RRC connection control. The RRC entities are also deployed in the resource connection node. Besides that the RRC messages are transmitted between the primary connection node and the UE, the RRC messages may also be transmitted between the resource connection node and the UE.

### The first example

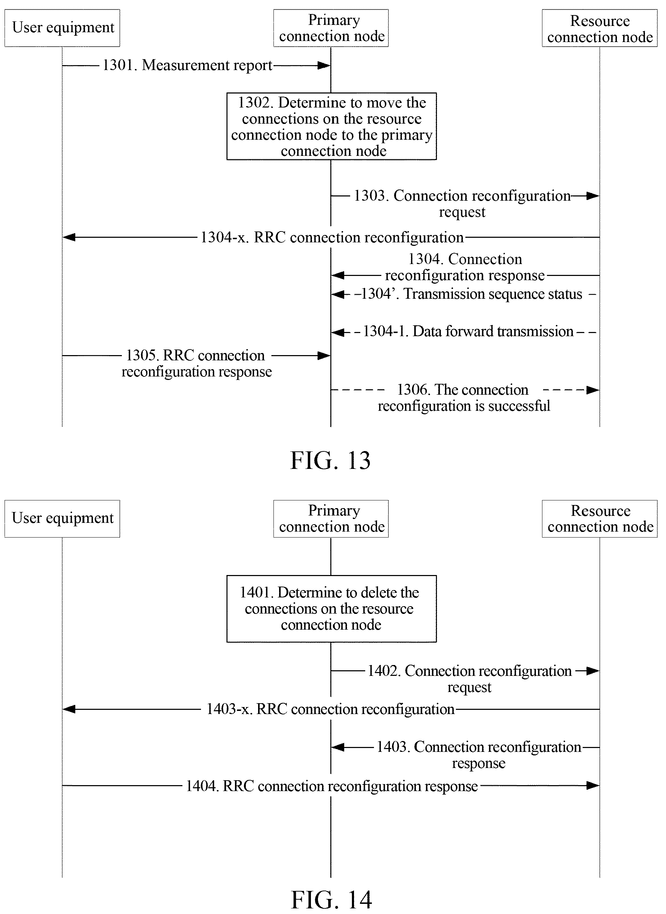

The present example is applicable to the scenario shown in FIG. 3, the UE originally establishes the dual-connection with the primary connection node and the resource connection node, thereafter, the UE detects that the signal quality of the cell (cell 2) in the coverage of the resource connection node where the UE is located becomes deteriorated and is no longer suitable for the UE remaining the connections on the resource connection node, and in the present example, the primary connection node determines to move the connections between the UE and the resource connection node to the primary connection node. FIG. 13 is a flow chart of connection management in the first example of the second embodiment, comprising:
1301∼1303. The descriptions thereof are the same as the descriptions of the steps 601∼603 in the first example of the first embodiment, and will not be repeated herein.
1304. the resource connection node returns a connection reconfiguration response to the primary connection node, which is the same as the description of the step 604 in the first example of the first embodiment;
   the operations of steps 1034' and 1034-1 are the same as the descriptions of the steps 604' and 604-1 in the first example of the first embodiment.
1304-x. this step can be concurrently executed with the step 1304. The resource connection node sends an RRC connection reconfiguration message to the UE, that is, the resource connection node instructs the UE to reconfigure the connections between the UE and the resource connection node to the primary connection node;
1035∼1036. The descriptions thereof are the same as the descriptions of the steps 606∼607 in the first example of the first embodiment.

### The second example

The present example is applicable to the scenario in which the UE originally establishes the dual connection between the primary connection node and the resource connection node, then due to the drop in service traffic, and in order to reduce the UE and network overhead, the connections between the UE and the resource connection node need to be deleted, and returns to the single connection status. In the present example, the primary connection node determines that the connections between the UE and the resource connection node need to be deleted. FIG. 14 is a flow chart of the connection management in the second example of the second embodiment, comprising:
1401∼1402. the descriptions thereof are the same as the descriptions of the steps 701∼702 in the second example of the first embodiment, and will not be repeated herein.
1403. the resource connection node returns a connection reconfiguration response to the primary connection node, wherein the connection reconfiguration response comprises information of all the connections deleted by the resource connection node, or the data transmission between the UE and the resource connection node has ended in the present example, and the connection reconfiguration response message may not comprise information of any connection;
1403-x. the primary connection node sends an RRC connection reconfiguration message to the UE to instruct the UE to delete all user plane connections between the UE and the resource connection node; this step can be concurrently executed with the step 1403;
1404. all the user plane data connections between the UE and the resource connection node are deleted in the step 1403-x, but the control plane signaling connections between the UE and the resource connection node are remained, therefore in the present example, the UE feeds back an RRC connection reconfiguration response message to the resource connection node.

### The third example

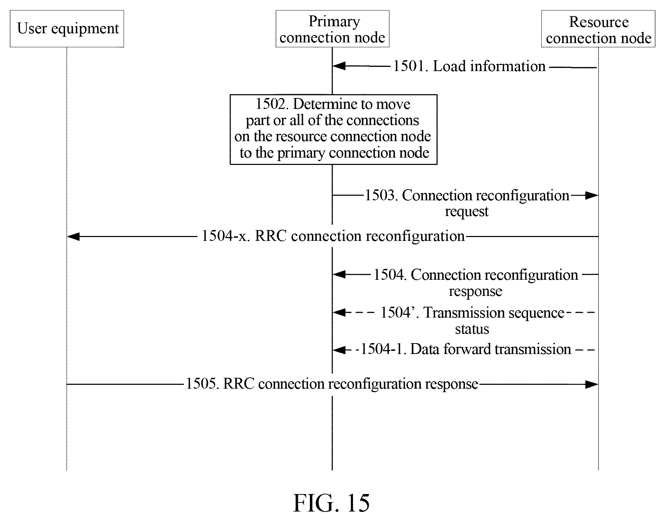

The present example is applicable to the scenario in which the UE originally establishes the dual connection with the primary connection node and the resource connection node, then due to the too heavy load of the resource connection node, part or all of the connections between the UE and the resource connection node need to be moved to the primary connection node. In the present example, the primary connection node decides and initiates moving part or all the connections between the UE and the resource connection node to the primary connection node. FIG. 15 is a flow chart of the connection management in the third example of the second embodiment, comprising:
1501∼1503. the descriptions thereof are the same as the descriptions of the steps 1001∼1003 in the third example of the first embodiment, and will not be repeated herein.
1504, 1504' and 1504-1. the descriptions thereof are the same as the descriptions of the steps 604, 604' and 604-1 in the first example of the first embodiment.
1504-x. this step is concurrently executed with the step 1504, the resource connection node sends an RRC connection reconfiguration message to the UE to instruct the UE to delete all the user plane data connections between the UE and the resource connection node;
1505. all the user plane data connections between the UE and the resource connection node are deleted in the step 1403-x, but the control plane signaling connections between the UE and the resource connection node are remained, therefore in the present example, the UE feeds back an RRC connection reconfiguration response message to the resource connection node. Of course, in the present example, all the user plane data connections and the control plane signaling connections between the UE and the resource connection node may also be deleted in the step 1504-x, therefore, in this step, the UE feeds back the RRC connection reconfiguration response message to the primary connection node.

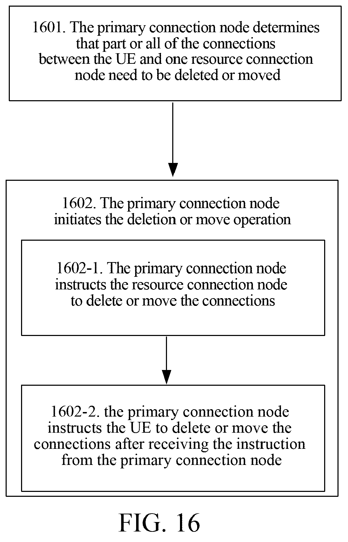

In combination of the above three examples, as show in FIG. 16, the connection management method in accordance with the second embodiment is applied to the scenario that the UE originally establishes connections with two or more connection nodes, comprising:
1601. the primary connection node determines that part or all of the connections between the UE and the resource connection node need to be deleted or moved.
   Wherein, the primary connection node judges whether part or all of the connections between the UE and the resource connection node need to be deleted or moved based on one or more factors of the received measurement report, the RRM algorithm, received load information and traffic transmission situation of the resource connection node;
1602. the primary connection node initiates the deletion or move operation, wherein the operation comprises:
   1602-1. the primary connection node instructs the resource connection node to delete or move the connections;
   1602-2. the primary connection node instructs the UE to delete or move the connections after receiving the instruction from the primary connection node.

Wherein, the above operations 1602-1 and 1602-2 may be executed successively.

With the method of the second embodiment, for the case of deleting part or all of the connections between the UE and the resource connection node, the resource connection node and the UE stop receiving and transmitting information in the deleted part or all of the connections; for the case of moving part or all of the connections between the UE and the resource connection node to the primary connection node, after the move is successful, the primary connection node and the UE can continue to receive and transmit information in the connections moved to the primary connection node, thus enabling the connection deletion, the connection move and the data continuity, thus achieving the connection management between the UE and the resource connection node in the multi-connection architecture.

Furthermore, the present embodiment further provides an access network element, comprising:
a determining module, configured to, when the access network element works as a primary connection node, determine whether at least part of connections between a UE and a resource connection node need to be deleted or moved;
an instructing module, configured to, when the access network element works as a primary connection node, when the determining module determines that at least part of the connections between the UE and the resource connection node need to be deleted or moved, instruct the resource connection node to correspondingly delete or move the at least part of the connections.

Preferably,
the instructing module is further configured to, when the access network element works as a primary connection node, when the determining module determines that at least part of the connections between the UE and the resource connection node need to be deleted or moved, instruct the UE to correspondingly delete or move the at least part of the connections; or, further configured to, when the access network element works as a resource connection node, after receiving an instruction for deleting or moving at least part of connections sent by a primary connection node, instruct the UE to correspondingly delete or move the at least part of the connections.

Preferably,
the instructing module being configured to instruct the resource connection node to correspondingly delete or move the at least part of the connections, comprises:
the instructing module being configured to instruct the resource connection node to correspondingly delete or move at least part of radio access bearers (RABs) borne by the resource connection node and used for user plane data transmission.

Preferably,
the instructing module being configured to: when the access network element works as a primary connection node, instruct the UE to correspondingly delete or move the at least part of the connections, comprises:
the instructing module being configured to: when the access network element works as a primary connection node, at the same time of instructing the resource connection node to correspondingly delete or move the at least part of the connections, instruct the UE to correspondingly delete or move the at least part of the connections; or,
the instructing module being configured to: when the access network element works as a primary connection node, after learning that the resource connection node has correspondingly deletes or moves the at least part of the connections, instruct the UE to correspondingly delete or move the at least part of the connections.

Preferably,
the instructing module being configured to instruct the UE to delete or move the at least part of the connections, comprises:
the instructing module being configured to instruct the UE to delete or move at least one user plane data radio bearer (DRB) between the UE and the resource connection node, or the at least one user plane DRB and at least one control plane signaling radio bearer (SRB) between the UE and the resource connection node.

Preferably,
the determining module being configured to determine whether at least part of connections between a UE and a resource connection node need to be deleted or moved, comprises:
the determining module being configured to judge whether at least part of connections between the UE and the resource connection node need to be deleted or moved based on at least one factor of a received measurement report, a radio resource management (RRM) algorithm, received load information and traffic transmission situation of the resource connection node.

Preferably, the instructing module being configured to instruct the resource connection node to correspondingly delete or move the at least part of the connections, comprises:
the instructing module being configured to initiate a connection reconfiguration request to the resource connection node, wherein the request carries information of connections that the primary connection node decides to delete, or decides to move from the resource connection node;
wherein, information of the connections at least comprises identification information of the connections.

Preferably,
the information of the connections further comprises identification information of uplink and downlink user plane GPRS tunneling protocol tunnels provided by the primary connection node and used by the deleted/moved connections for data forward transmission at an Xn Interface between the resource connection node and the primary connection node.

Preferably,
the information of the connections further comprises instruction information of whether each deleted/moved connection performs the data forward transmission;
when the access network element works as a resource connection node, it further comprises:
a sending module, configured to: when determining that a value of the instruction information of whether to perform the data forward transmission represents that data forward transmission needs to be performed, forward the data to the primary connection node.

Preferably, the access network element further comprises:
a sending module, configured to: when the access network element works as a resource connection node, after correspondingly deleting/moving the connections based on the instruction of the primary connection node, send information of all the deleted/moved connections to the primary connection node; wherein, it at least comprises identification information of all the deleted/moved connections.

Preferably,
information of all the deleted/moved connections sent by the sending module further comprises an instruction of whether each deleted/moved connection performs the data forward transmission.

Preferably,
the information of all the deleted/moved connections sent by the sending module further comprises a transmission sequence status of data transmission in each deleted/moved connection, comprising: any one or any combination of a receiving status instruction of uplink Packet Data Convergence Protocol Service Data Unit (PDCP SDU), a count number of a first lost uplink PDCP SDU and a count number of a first lost downlink PDCP SDU.

Preferably,
the sending module is further configured to: after correspondingly deleting/moving the connections based on the instruction of the primary connection node, send a transmission sequence status of data transmission in each deleted/moved connection to the primary connection node, comprising: any one or any combination of a receiving status instruction of uplink Packet Data Convergence Protocol Service Data Unit (PDCP SDU), a count number of a first lost uplink PDCP SDU and a count number of a first lost downlink PDCP SDU.

Those ordinarily skilled in the art can understand that all or some of steps of the abovementioned method may be completed by the programs instructing the relevant hardware, and the abovementioned programs may be stored in a computer-readable storage medium, such as read only memory, magnetic or optical disk. Alternatively, all or some of the steps of the abovementioned embodiments may also be implemented by using one or more integrated circuits. Accordingly, each module/unit in the abovementioned embodiments may be realized in a form of hardware, or in a form of software function modules. The present invention is not limited to any specific form of hardware and software combinations.

The above description is only preferred embodiments of the present invention and is not intended to limit the protection scope of the embodiments of the present invention. Based on the inventive content of the embodiments of the present invention, there are also a variety of other embodiments, and without departing from the spirit and essence of the embodiments of the present invention, those skilled in the art can make various appropriate changes and modifications in accordance with the embodiments of the present invention, and any modifications, equivalent replacements and improvements made within the spirit and principle of the embodiments of the present invention should be included within the protection scope of of the embodiments of the present invention.

### Industrial Applicability

The embodiment of the present invention achieves the connection management between the UE and the resource connection node in a dual-connection architecture, particularly, achieves the connection management when the resource connection node is no longer suitable for providing the UE with information transmission or no longer suitable for providing the UE with information transmission of all the previously established connections.

## Claims

1. A connection management method, applied to a scenario in which a user equipment (UE) establishes connections with at least two access network elements at the same time, comprising:
when determining that at least part of connections between the user equipment (UE) and a resource connection node need to be deleted or moved, a primary connection node instructing the resource connection node to correspondingly delete or move the at least part of the connections, and the resource connection node or the primary connection node instructing the UE to correspondingly delete or move the at least part of the connections.

2. The method of claim 1, wherein,
said instructing the resource connection node to correspondingly delete or move the at least part of the connections comprises:
the primary connection node instructing the resource connection node to correspondingly delete or move at least part of radio access bearers (RABs) used for user plane data transmission and borne by the resource connection node.

3. The method of claim 1, wherein,
the primary connection node instructing the UE to correspondingly delete or move the at least part of the connections comprises:
at the same time of instructing the resource connection node to correspondingly delete or move the at least part of the connections, the primary connection node instructing the UE to correspondingly delete or move the at least part of the connections; or,
the primary connection node instructing the UE to correspondingly delete or move the at least part of the connections after learning that the resource connection node has correspondingly deleted or moved the at least part of the connections.

4. The method of claim 1, wherein,
the resource connection node instructing the UE to correspondingly delete or move the at least part of the connections comprises:
the resource connection node instructing the UE to correspondingly delete or move the at least part of the connections after receiving the instruction of the primary connection node.

5. The method of claim 1, 3 or 4, wherein,
said instructing the UE to delete or move the at least part of the connections comprises:
instructing the UE to delete or move at least one user plane data radio bearer (DRB) between the UE and the resource connection node, or the at least one user plane DRB and at least one control plane signaling radio bearer (SRB) between the UE and the resource connection node.

6. The method of claim 1, wherein,
the primary connection node determining that at least part of connections between the UE and a resource connection node need to be deleted or moved comprises:
the primary connection node judging whether at least part of the connections between the UE and the resource connection node need to be deleted or moved based on at least one factor of a received measurement report, a radio resource management (RRM) algorithm, received load information and traffic transmission status of the resource connection node.

7. The method of claim 1, wherein,
said instructing the resource connection node to correspondingly delete or move the at least part of the connections comprises:
initiating a connection reconfiguration request to the resource connection node, wherein the request carries information of connections that the primary connection node decides to delete or decides to move from the resource connection node;
wherein, the information of the connections comprises at least identification information of the connections.

8. The method of claim 7, wherein,
the information of the connections further comprises identification information of uplink and downlink user plane GPRS tunneling protocol tunnels provided by the primary connection node and used by the deleted/moved connections for data forward transmission at an Xn Interface between the resource connection node and the primary connection node.

9. The method of claim 7 or 8, wherein,
the information of the connections further comprises instruction information of whether each deleted/moved connection performs the data forward transmission;
when determining that a value of the instruction information of whether to perform the data forward transmission represents that the data forward transmission needs to be performed, the resource connection node forwards the data to the primary connection node.

10. The method of claim 1, 7 or 8, further comprising:
after correspondingly deleting/removing the connections based on the instruction of the primary connection node, the resource connection node sending information of all the deleted/moved connections to the primary connection node; wherein, the information at least comprises identification information of all the deleted/moved connections.

11. The method of claim 10, wherein,
information of all the deleted/moved connections further comprises an instruction of whether each deleted/moved connection performs the data forward transmission.

12. The method of claim 10, wherein,
the information of all the connections further comprises a transmission sequence status of data transmission in each deleted/moved connection, comprising: any one or any combination of a receiving status instruction of uplink Packet Data Convergence Protocol Service Data Unit (PDCP SDU), a count number of a first lost uplink PDCP SDU and a count number of a first lost downlink PDCP SDU.

13. The method of claim 10, wherein,
after correspondingly deleting/moving the connections based on the instruction of the primary connection node, the resource connection node sends a transmission sequence status of data transmission in each deleted/moved connection to the primary connection node, comprising: any one or any combination of a receiving status instruction of uplink PDCP SDU, a count number of a first lost uplink PDCP SDU and a count number of a first lost downlink PDCP SDU.

14. The method of claim 1, further comprising,
after receiving the instruction sent by the primary connection node, the resource connection node deletes all of connections between the UE and the resource connection node.

15. The method of claim 1, 3 or 5, further comprising:
after correspondingly deleting or moving the at least part of the connections, the UE sending a response to the primary connection node.

16. The method of claim 15, further comprising:
after receiving the response replied by the UE, notifying the resource connection node that deleting or moving is successful.

17. An access network element, comprising:
a determining module, configured to, when the access network element works as a primary connection node, determine whether at least part of connections between a UE and a resource connection node need to be deleted or moved;
an instructing module, configured to, when the access network element works as a primary connection node, when the determining module determines that at least part of the connections between the UE and the resource connection node need to be deleted or moved, instruct the resource connection node to correspondingly delete or move the at least part of the connections.

18. The access network element of claim 17, wherein,
the instructing module is further configured to, when the access network element works as a primary connection node, when the determining module determines that at least part of the connections between the UE and the resource connection node need to be deleted or moved, instruct the UE to correspondingly delete or move the at least part of the connections; or, further configured to, when the access network element works as a resource connection node, after receiving an instruction for deleting or moving at least part of connections sent by a primary connection node, instruct the UE to correspondingly delete or move the at least part of the connections.

19. The access network element of claim 17, wherein,
the instructing module being configured to instruct the resource connection node to correspondingly delete or move the at least part of the connections, comprises:
the instructing module being configured to instruct the resource connection node to correspondingly delete or move at least part of radio access bearers (RABs) borne by the resource connection node and used for user plane data transmission.

20. The access network element of claim 18, wherein,
the instructing module being configured to: when the access network element works as a primary connection node, instruct the UE to correspondingly delete or move the at least part of the connections, comprises:
the instructing module being configured to: when the access network element works as a primary connection node, at the same time of instructing the resource connection node to correspondingly delete or move the at least part of the connections, instruct the UE to correspondingly delete or move the at least part of the connections; or,
the instructing module being configured to: when the access network element works as a primary connection node, after learning that the resource connection node has correspondingly deletes or moves the at least part of the connections, instruct the UE to correspondingly delete or move the at least part of the connections.

21. The access network element of claim 17 or 20, wherein,
the instructing module being configured to instruct the UE to delete or move the at least part of the connections, comprises:
the instructing module being configured to instruct the UE to delete or move at least one user plane data radio bearer (DRB) between the UE and the resource connection node, or the at least one user plane DRB and at least one control plane signaling radio bearer (SRB) between the UE and the resource connection node.

22. The access network element of claim 17, wherein,
the determining module being configured to determine whether at least part of connections between a UE and a resource connection node need to be deleted or moved, comprises:
the determining module being configured to judge whether at least part of connections between the UE and the resource connection node need to be deleted or moved based on at least one factor of a received measurement report, a radio resource management (RRM) algorithm, received load information and traffic transmission situation of the resource connection node.

23. The access network element of claim 17, wherein,
the instructing module being configured to instruct the resource connection node to correspondingly delete or move the at least part of the connections, comprises:
the instructing module being configured to initiate a connection reconfiguration request to the resource connection node, wherein the request carries information of connections that the primary connection node decides to delete, or decides to move from the resource connection node;
wherein, information of the connections at least comprises identification information of the connections.

24. The access network element of claim 23, wherein,
the information of the connections further comprises identification information of uplink and downlink user plane GPRS tunneling protocol tunnels provided by the primary connection node and used by the deleted/moved connections for data forward transmission at an Xn Interface between the resource connection node and the primary connection node.

25. The access network element of claim 23 or 24, wherein,
the information of the connections further comprises instruction information of whether each deleted/moved connection performs the data forward transmission;
when the access network element works as a resource connection node, the access network element further comprises:
a sending module, configured to: when determining that a value of the instruction information of whether to perform the data forward transmission represents that the data forward transmission needs to be performed, forward the data to the primary connection node.

26. The access network element of claim 17, 23 or 24, further comprising:
a sending module, configured to: when the access network element works as a resource connection node, after correspondingly deleting/moving the connections based on the instruction of the primary connection node, send information of all the deleted/moved connections to the primary connection node; wherein, the information at least comprises identification information of all the deleted/moved connections.

27. The access network element of claim 26, wherein,
information of all the deleted/moved connections sent by the sending module further comprises an instruction of whether each deleted/moved connection performs the data forward transmission.

28. The access network element of claim 26, wherein,
the information of all the deleted/moved connections sent by the sending module further comprises a transmission sequence status of data transmission in each deleted/moved connection, comprising: any one or any combination of a receiving status instruction of uplink Packet Data Convergence Protocol Service Data Unit (PDCP SDU), a count number of a first lost uplink PDCP SDU and a count number of a first lost downlink PDCP SDU.

29. The access network element of claim 26, wherein,
the sending module is further configured to: after correspondingly deleting/moving the connections based on the instruction of the primary connection node, send a transmission sequence status of data transmission in each deleted/moved connection to the primary connection node, comprising: any one or any combination of a receiving status instruction of uplink Packet Data Convergence Protocol Service Data Unit (PDCP SDU), a count number of a first lost uplink PDCP SDU and a count number of a first lost downlink PDCP SDU.
